# FASCICULE DE BREVET EUROPEEN

(11) **EP 0 495 708 B1**
(45) Date de publication et mention de la délivrance du brevet: **13.04.1994**
(21) Numéro de dépôt: 92400094.6
(22) Date de dépôt: 14.01.1992
(51) Int. Cl.: G08G 1/017, G07C 9/00, G07B 15/00

(54) **Système de communication entre une borne et des mobiles**
Kommunikationsanlage zwischen einer ortsgebundenen Station und mobilen Stationen
System for communication between a fixed station and mobile stations

(30) Priorité: 18.01.1991 FR 9100559
(43) Date de publication de la demande: 22.07.1992
(73) Titulaire: GEMPLUS CARD INTERNATIONAL, F-13420 Gémenos (FR)
(72) Inventeur: Fallah, Michel, F-75116 Paris (FR)
(74) Mandataire: Schmit, Christian Norbert Marie

(56) Documents cités:
- EP-A- 0 041 193
- EP-A- 0 285 419
- CH-A- 541 845
- DE-A- 3 026 143
- GB-A- 2 186 409
- US-A- 4 495 496

## Description

L'invention concerne les échanges de données entre une station fixe et des véhicules ou mobiles arrivant à proximité de cette station.

L'application typique à laquelle on se référera dans la suite pour faciliter les explications est celle d'une station de péage sur une autoroute, dans laquelle on souhaite installer des moyens pour que des véhicules puissent acquitter la taxe due sans pourtant être obligés de s'arrêter; cela permettrait d'éviter la perte de temps qui résulte de l'arrêt, et les bouchons qui résultent de la lenteur d'une perception manuelle de la taxe. On utilisera donc des moyens d'émission-réception sans contact (moyens électromagnétiques au sens large), et se pose alors le problème de la communication entre la station et les différents véhicules qui se présentent.

D'autres applications sont envisageables, dans laquelle l'invention pourrait utilement être appliquée. Par exemple, on peut l'envisager dans un système de paiement pour transports en commun; on peut l'envisager dans une société utilisant un grand nombre de véhicules dont les entrées et sorties doivent être répertoriées; on peut l'envisager dans un système de contrôle de gendarmerie, etc.

D'une manière générale, le problème que vise à résoudre l'invention est l'amélioration des possibilités d'échanges personnalisés entre une station et des mobiles, dans un contexte où plusieurs mobiles risquent de se présenter simultanément, ces mobiles n'étant pas identifiés à l'avance. Par l'adjectif "personnalisés", on entend le fait que la communication entre la station et chaque mobile est individuelle, c'est-à-dire que des messages peuvent être envoyés à destination d'un mobile unique si on le désire et non à destination de tous ceux qui sont présents.

La "station" est considérée comme fixe par rapport aux "mobiles" qui se présentent devant elle; il s'agit toutefois d'une fixité relative : la station pourrait elle-même être mobile, par exemple dans une application de contrôle de gendarmerie.

Dans l'exemple du péage sur autoroute, la station fixe peut voir défiler un grand nombre de véhicules, y compris éventuellement plusieurs à la fois pendant le temps que dure l'échange de données entre la station et les véhicules. Cet échange de données peut consister en une identification du véhicule (celui-ci envoie un signal d'identification), en une transaction (acquittement d'une taxe), et un message de "transaction effectuée", renvoyé au véhicule préalablement identifié.

On comprendra aisément les difficultés que cela peut poser si plusieurs véhicules tentent simultanément de communiquer avec la station. Dans l'enseignement du document CH-A-541 845, il est prévu que les dates de réponse des différents mobiles soient différenciées pour éviter de recevoir ainsi toutes les réponses en même temps. Cependant des conflits de réception peuvent néanmoins apparaître pour lesquels la reconnaissance du mobile qui émet n'est pas assurée.

Pour améliorer les possibilités d'échanges de données personnalisées entre une station ou "borne" et des mobiles susceptibles de se présenter à proximité de la borne, on prévoit selon l'invention un système utilisant un protocole d'échanges qui commence par un signal d'initialisation commun aux différents mobiles qui se présentent et qui continue par l'émission d'un signal d'identification par chaque mobile, cette émission étant effectuée au bout d'une durée liée à la valeur d'un caractère (ou plus généralement d'une partie) d'un code spécifique intrinsèque associé au mobile (durée mesurée à partir du signal d'initialisation), de telle manière qu'à des caractères différents correspondent des instants d'émission différents. De plus, pour différencier correctement les réponses, ce caractère du code spécifique est lui même envoyé dans le signal d'identification afin que la station puisse corréler le retard à réception avec la valeur de ce caractère reçu pour reconnaître le mobile qui émet. Pour exprimer cette idée à l'aide d'un exemple concret, à chaque mobile peut être associé un numéro de référence, et le caractère qui définit l'instant d'émission peut être le premier chiffre du numéro; un mobile ayant le chiffre 1 pour premier chiffre émettra au bout d'un temps T; un véhicule ayant 2 pour premier chiffre émettra au bout de T + t; les autres au bout de T + 2t, T + 3t, etc., selon le premier chiffre de leur numéro de référence.

Comme on le verra plus loin, le mobile émet alors de préférence comme signal d'identification le caractère spécifique qui a servi à la définition de l'instant d'émission (par exemple le début du code spécifique intrinsèque); et de préférence il émet ensuite un mot ayant des caractéristiques imposées reconnaissables par la borne, telles que la borne puisse immédiatement détecter si plusieurs mobiles émettent simultanément (car il est possible que se présentent simultanément deux mobiles ayant le même caractère spécifique).

L'invention a donc pour objet un système de communications personnalisées entre une borne et des mobiles susceptibles de se présenter à proximité de cette borne, et utilisant un protocole d'échanges qui commence par un signal d'initialisation commun aux différents mobiles qui se présentent, et qui continue par l'émission d'un signal d'identification par chaque mobile, cette émission étant effectuée au bout d'une durée liée à la valeur d'une première partie d'un code spécifique intrinsèque associé au mobile, cette durée étant mesurée à partir du signal d'initialisation, caractérisé en ce que le signal d'identification envoyé par chaque mobile comporte cette première partie de ce code spécifique.

Par conséquent, selon un aspect de l'invention, on propose un système de communication comprenant :
- un "transpondeur" associé à chaque mobile susceptible de se présenter, un code spécifique d'au moins un caractère étant associé à chaque transpondeur, les caractères étant choisis dans un ensemble ordonné (caractères numériques, ou alphabétiques ou alphanumériques par exemple) dans lequel on attribue des valeurs ordonnées à ces caractères ou à des groupes de ces caractères;
- un organe de contrôle situé dans la borne et communiquant par voie électromagnétique avec les transpondeurs;

le système ayant les particularités suivantes :
- un transpondeur est apte à émettre un signal d'identification seulement à partir de la réception d'un signal d'initialisation transmis par la borne;
- le transpondeur émet le début de son code spécifique au bout d'un temps lié d'une manière univoque à la valeur de ce début, de manière que deux transpondeurs ayant un début de code différent émettent à des moments différents.

Par ce moyen on obtient que les différents codes spécifiques n'arrivent pas simultanément à la borne même si plusieurs mobiles se présentent en même temps dans le champ d'action de la borne.

La borne peut donc enregistrer les différentes émissions en provenance des transpondeurs et détecter la présence de plusieurs transpondeurs dans son rayon d'action. Il s'instaure alors un dialogue entre la borne et chacun des transpondeurs : chaque transpondeur, interrogé par la borne en étant désigné par le début de code reçu par celle-ci, peut par exemple :
- recevoir un code personnel destiné à servir pendant la durée de l'échange de données,
- émettre des données qui le concernent (code d'identification du transpondeur, numéro d'immatriculation du véhicule qui le porte, numéro de compte monétaire du propriétaire, etc.),
- recevoir d'autres données,
- recevoir de la borne un signal de fin d'échanges,
- etc.

Le début de code émis par un transpondeur en réponse au signal d'initialisation envoyé par la borne peut être constitué par le premier caractère d'un code spécifique à plusieurs caractères. Si par exemple il s'agit d'un caractère numérique décimal (chiffre entre 0 et 9), il y a cependant une probabilité non négligeable (dépendant du nombre de véhicules qui peuvent se présenter simultanément dans le champ d'action de la borne) pour que deux véhicules ayant le même premier caractère de code se présentent simultanément et émettent donc simultanément; dans ce cas, une confusion pourra se produire au niveau de la borne qui croira dialoguer avec un transpondeur alors qu'il y en a deux. La probabilité diminue si on utilise un caractère alphabétique ou alphanumérique, ou si l'on utilise les deux premiers caractères du code comme début de code, ou même un plus grand nombre de caractères.

Toutefois, il est difficile d'envisager d'utiliser plus de deux caractères, et encore à condition que ces caractères soient choisis dans une suite ordonnée comprenant peu de caractères. En effet, la séquence d'interrogation s'allongerait beaucoup trop : en supposant par exemple que chaque transpondeur n'émet qu'au bout d'une durée proportionnelle au rang d'un caractère alphabétique parmi 26 possibles, il faut prévoir que la séquence d'interrogation commence par 26 temps d'attente de réception d'un des 26 caractères possibles. Et si on utilise les deux premiers caractères du code pour faire chuter la probabilité que deux véhicules ayant le même début de code se présentent simultanément, la séquence d'interrogation devra commencer par 26x26 temps d'attente, ce qui devient prohibitif sans même parvenir à ramener la probabilité de confusion à une valeur suffisamment faible.

C'est pourquoi un perfectionnement supplémentaire est proposé ici : en réponse au signal d'initialisation émis par la borne, chaque transpondeur émet un signal (en principe le début de son code) au bout d'un temps lié de manière univoque au début de son code spécifique, suivi d'un mot qui est une suite de bits, cette suite n'étant pas tout-à-fait quelconque mais étant d'un type reconnaissable et telle que la superposition de deux suites de ce type donne une suite d'un type différent. La suite est de préférence une suite ayant des caractéristiques partiellement aléatoires.

Pour clarifier cette définition abstraite, un exemple très simple peut être donné : la suite aléatoire est par exemple une suite de n "zéros logiques" et n "uns logiques", mélangés dans un ordre aléatoire. Il y a toujours n zéros et n uns mais leur ordre est aléatoire. Si deux transpondeurs émettent simultanément des suites de ce type, la borne recevra une suite de zéros et de uns qui sera en quelque sorte une fonction OU logique ou ET logique combinant les deux suites émises en superposition, et qui ne comprendra certainement pas autant de zéros que de uns. La suite reçue sera d'un "type" différent des types des suites émises. Il sera très facile pour la borne de détecter que plusieurs transpondeurs ont envoyé simultanément une suite aléatoire dont les caractéristiques sont imposées.

Par suite aléatoire, on comprendra bien entendu aussi des suites pseudo aléatoires, des suites ressemblant à des suites aléatoires, etc.

Bien que l'émission d'une suite aléatoire soit la solution préférée de l'invention, on peut aussi prévoir que la suite est constituée par des mots binaires non aléatoires et représentant un ou plusieurs caractères (pris par exemple dans un code d'identification du transpondeur) mais seulement à condition que la superposition d'émissions par plusieurs transpondeurs produise au niveau de la borne une suite de caractères qui ne peuvent pas être les caractères de transpondeurs individuels. Par exemple, les caractères des transpondeurs sont des chiffres décimaux codés en binaire, avec un codage tel que la superposition d'émission de deux ou plusieurs chiffres, quels qu'ils soient, donne une suite binaire qui ne puisse pas être interprétée comme un chiffre. Il est alors facile de savoir si un seul transpondeur a envoyé un chiffre ou si au contraire plusieurs transpondeurs ont émis simultanément. Il est facile de trouver de tels codes : par exemple un chiffre de 0 à 9 peut être codé par dix bits successifs qui sont tous à zéro sauf un seul, la position du bit non nul représentant le chiffre. Toute superposition de chiffres différents donne un code qui ne représente pas un chiffre puisqu'il a plusieurs bits à 1.

Si une émission simultanée par plusieurs transpondeurs se produit ainsi du fait que le début de code spécifique des deux transpondeurs est identique, la borne demande alors aux transpondeurs d'émettre la suite de ce code; là encore, cette émission est effectuée au bout d'un temps lié de manière univoque à la valeur de cette suite. La probabilité pour que la suite du code soit identique pour deux transpondeurs qui avaient déjà leurs débuts identiques chute alors considérablement. Si cependant on risquait d'avoir une identité, on procéderait à nouveau comme précédemment, avec l'émission d'une suite binaire (aléatoire ou non) qui permette de détecter l'émission simultanée par deux ou plusieurs transpondeurs.

Par le mot "transpondeur", on entend un émetteur récepteur; mais il est ici qualifié de transpondeur (transmetteur répondeur) car son rôle principal est de transmettre des informations surtout en réponse aux ordres de la borne.

D'autres caractéristiques et avantages de l'invention apparaîtront à la lecture de la description détaillée qui suit et qui est faite en référence aux dessins annexés dans lesquels :

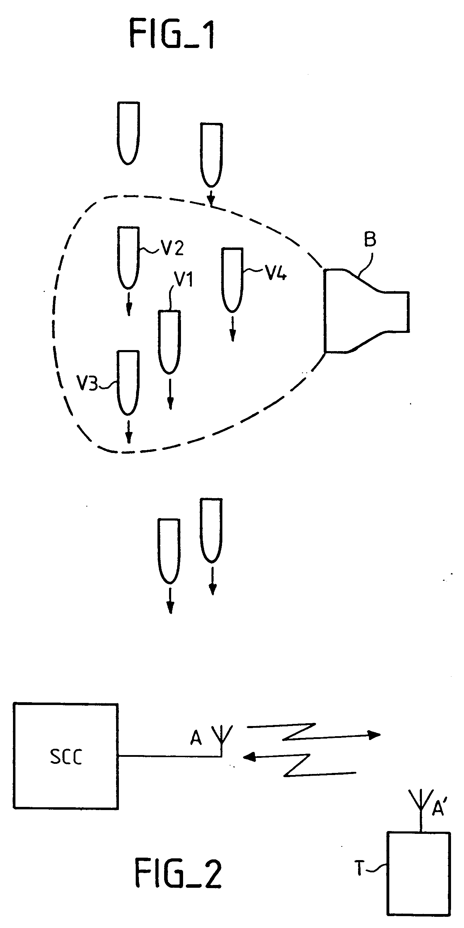

- la figure 1 représente symboliquement la borne près de laquelle se présentent des mobiles;
- la figure 2 représente symboliquement le système de communication entre la borne et un mobile;
- la figure 3 illustre le protocole de signaux permettant d'identifier les mobiles avant un échange de données personnalisé.

Le mode de réalisation préférentiel décrit ci après est expliqué en référence à une application de type péage autoroutier.

Une borne de péage B est pourvue de moyens de communication électromagnétiques ayant un champ d'action limité dans l'espace, par exemple à quelques dizaines de mètres autour d'elle. Des véhicules peuvent passer dans ce champ et dialoguer avec la borne pendant ce passage. Le déroulement de ce dialogue doit être très rapide : à titre d'exemple, si les véhicules roulent à 100 km/h ils restent 1 seconde dans un champ de 30 mètres.

Sur la figure sont représentés quatre véhicules V1, V2, V3, V4 présents simultanément dans le champ de la borne.

Sur chaque véhicule est monté un transpondeur capable de communiquer avec la borne.

On fait les hypothèses suivantes :
- la borne émet des informations pouvant être captées par tous les transpondeurs situés dans son rayon d'action;
- la borne est sensible à tous les signaux provenant de transpondeurs situés dans son rayon d'action;
- la borne et l'ensemble des transpondeurs émettent sur le même canal de transmission (même fréquence porteuse);
- la borne doit effectuer dans des délais impartis (courts) l'ensemble des transactions avec tous les transpondeurs présents;
- la borne ne peut pas en même temps émettre et recevoir (en principe);
- les transpondeurs dialoguent avec la borne mais pas entre eux;

La borne jouera le rôle de maître du système et se chargera d'allouer aux transpondeurs identifiés les intervalles de temps pendant lesquels ils pourront émettre. Elle connaîtra par conséquent l'historique des échanges avec chaque transpondeur depuis l'établissement de la liaison.

Les transpondeurs joueront le rôle d'esclaves, et ne pourront émettre ou agir que sur ordre de la borne.

A chaque transpondeur est associé un code spécifique intrinsèque composé d'une combinaison de caractères prédéfinis choisis dans une suite ordonnée. Par exemple, la suite est une suite de chiffres décimaux, ou de caractères alphabétiques, ou de caractères alphanumériques.

Pour fixer les idées, le code spécifique intrinsèque du transpondeur est le numéro d'immatriculation du véhicule, ou encore le numéro de série de fabrication du transpondeur, ou d'une carte à puce qui est insérée dans le transpondeur, ou pourquoi pas directement un numéro de compte en banque, etc.

Un transpondeur n'émet pas spontanément; il n'émet qu'à partir d'un signal d'initialisation qui sera envoyé en principe périodiquement par la borne.

Lorsque le transpondeur reçoit un tel signal, cela veut dire qu'il est dans le champ d'action de la borne. Il attend alors un temps proportionnel au premier caractère de son code spécifique intrinsèque.

Il émet alors ce premier caractère (il pourrait émettre un autre type de signal d'identification qui lui est propre, mais dans cet exemple préférentiel il émet ce premier caractère). Et il le fait suivre d'un signal représentant un mot ayant des caractéristiques de type déterminé, mais qui est a priori différent d'un véhicule à un autre, et qui est tel que la borne puisse déterminer sans difficulté si un mot unique est émis ou si deux mots différents ont été émis simultanément par deux transpondeurs.

Dans l'exemple préférentiel décrit, ce mot est un mot de type aléatoire, c'est-à-dire qu'il n'est pas prédéterminé à l'avance, de sorte qu'il est extrêmement peu probable que deux véhicules présents simultanément et émettant simultanément le même premier caractère émettent aussi le même mot aléatoire.

Pour qu'il n'y ait pas de difficultés à distinguer si deux transpondeurs émettent simultanément, on peut procéder comme suit : la suite aléatoire est une suite de n bits 1 et n bits zéros, aléatoirement ordonnés dans le temps. Si deux suites sont émises simultanément, la borne recevra une suite n'ayant pas le même nombre de 1 et de 0 et il sera très facile de la distinguer d'une suite due à une émission unique par un seul transpondeur et qui a le même nombre de 1 et de 0.

S'il y a émission par un seul transpondeur, le dialogue pourra être établi ultérieurement avec ce transpondeur en utilisant comme signal d'identification le premier caractère qu'il a émis.

Mais s'il y a deux ou plusieurs transpondeurs qui ont émis simultanément le même premier caractère, une étape d'interrogation complémentaire aura lieu; elle consistera à faire émettre par les transpondeurs le deuxième caractère de leur code spécifique.

Cette étape ne se déroule cependant qu'après la fin de la durée d'attente nécessaire pour attendre que tous les transpondeurs éventuellement présents aient émis leur premier caractère.

Pour fixer les idées on peut supposer à titre d'exemple que les véhicules V1 à V4 ont les codes spécifiques numériques suivants :
- V1 :: 1260
- V2 :: 3542
- V3 :: 5214
- V4: 5379

Et on suppose que les temps d'attente pour émettre un caractère du code après le signal d'initialisation sont T + Nt, où N représente le caractère à émettre (entre 0 et 9).

Le protocole est le suivant :
- Etape 0 :: temps 0; la borne émet le signal d'initialisation INIT, qui est reçu par tous les transpondeurs à l'intérieur du rayon d'action;
- Etape 1 :: temps T à T + 9t; la borne est à l'écoute des émissions en provenance des transpondeurs; il y en a ici quatre, qui vont émettre aux temps T + t, T + 3t, et T + 5t respectivement puisque leurs premiers caractères sont 1, 3 et 5 respectivement. V3 et V4 émettent tous les deux au temps T + 5t;
Etape 1a : V1 émet son premier caractère (1), suivi d'un code aléatoire à n bits de type reconnaissable; la borne reconnaît le caractère et la conformité du code aléatoire avec le type imposé.
Etape 1b : aucun transpondeur n'émet;
Etape 1c : V2 émet son premier caractère (3) et un code aléatoire, qui sont reconnus et vérifiés par la borne;
Etape 1d : aucun transpondeur n'émet;
Etape 1e : V3 et V4 émettent simultanément leur caractère (5); la borne le reçoit et le reconnaît; ils émettent aussi chacun un code aléatoire, mais la superposition de ces codes fait que la borne ne le reconnaît pas comme conforme au type imposé; un conflit est détecté et sera géré ultérieurement;
Etapes 1f : la borne reste en attente de messages d'autres transpondeurs, pendant une durée suffisante compte tenu de la règle adoptée pour l'émission du premier caractère du code; ici pas d'autre message reçu;
- Etape 2 :: le cycle d'écoute est terminé; la borne va attribuer à chaque transpondeur identifié un code provisoire, valable pendant la durée du dialogue et annulé après; ce code servira à personnaliser le dialogue entre la borne et chaque transpondeur;
Etape 2a : la borne s'adresse au transpondeur ayant envoyé le caractère (1), c'est-à-dire celui du véhicule V1, et lui attribue un code provisoire C1; pour s'adresser à ce transpondeur, la borne utilisera tout simplement le premier caractère (1);
Etape 2b : la borne s'adresse au véhicule V2 (en envoyant le caractère d'identification 3) et lui attribue un code C2;
- Etape 3 :: la borne s'adresse à tous les véhicules ayant envoyé le caractère 5, et leur demande d'émettre le second caractère de leur code spécifique intrinsèque, et de ne l'émettre qu'au bout d'un temps lié d'une manière univoque à la valeur de ce second caractère : un signal REINIT est émis à cet effet à leur intention pour définir l'origine des temps;
- Etape 4 :: les transpondeurs des véhicules V3 et V4 ainsi adressés émettent le second caractère de leur code spécifique au bout d'un temps T + Nt si N est la valeur du caractère (de 0 à 9);
Etape 4a : aucun transpondeur ne répond
Etape 4b : le véhicule V3 qui a (2) pour second caractère répond en envoyant ce caractère, suivi d'un mot aléatoire;
Etape 4c : le véhicule V4 répond en envoyant le caractère (3) qui est le second caractère de son code; puis un mot aléatoire.
Etape 4d : la borne attend jusqu'à la fin (T + 9t) mais aucun autre transpondeur ne répond.
- Etape 5 :: ayant identifié les deux transpondeurs qui avaient émis en conflit, la borne leur alloue à chacun un code provisoire pour la durée de la transaction;
Etape 5a : la borne s'adresse au véhicule V3 en émettant la suite de caractères 52 (ou simplement le deuxième caractère 2) qui représente le début de son code spécifique, et lui alloue un code provisoire C3;
Etape 5b: la borne s'adresse à V4 en émettant la suite 53 (ou simplement 3) qui représente le début de son code spécifique intrinsèque, et lui attribue un code provisoire C4.
- Etapes suivantes :: le dialogue peut être engagé sélectivement avec chaque transpondeur en utilisant le code provisoire attribué; ce dialogue peut d'ailleurs commencer avec chaque transpondeur dans des intervalles de temps libres dès que ce transpondeur a reçu un code provisoire. C'est la borne qui gère complètement l'attribution des temps d'émission de chaque transpondeur.

On comprendra qu'il est particulièrement intéressant que le caractère de code émis par chaque transpondeur soit celui qui sert au calcul de la durée d'attente avant émission. De cette manière, la borne peut vérifier qu'il y a bien coïncidence entre le caractère reçu et la durée au bout duquel il est reçu. Mais on pourrait aussi envisager d'associer au transpondeur deux codes spécifiques intrinsèques : un premier code dont les caractères servent à calculer à quel moment le transpondeur doit répondre, et un deuxième code qui est un code d'identification envoyé à la borne au bout du temps calculé.

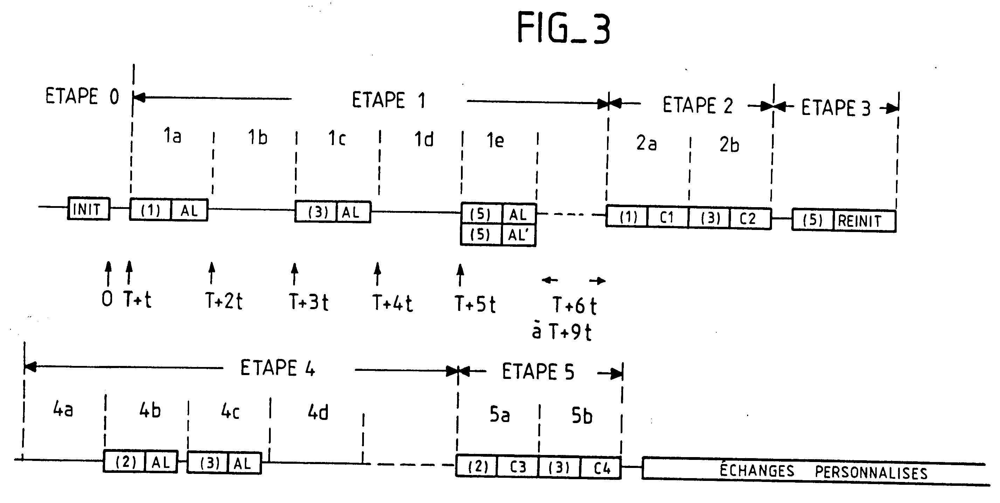

La figure 3 rappelle le chronogramme temporel des émissions et réceptions conformes à ce qui a été indiqué ci-dessus. L'échange peut avoir lieu avec tout mobile ayant reçu un code attribué par la borne (exemple échanges personnalisés avec V(C1) et V(C2) après l'étape 2).

## Revendications

1. Système de communication personnalisée entre une borne (B) et des mobiles (V1 à V4) susceptibles de se présenter à proximité de cette borne, et utilisant un protocole d'échanges qui commence par un signal d'initialisation commun aux différents mobiles qui se présentent, et qui continue par l'émission d'un signal d'identification par chaque mobile, cette émission étant effectuée au bout d'une durée liée à la valeur d'une première partie d'un code spécifique intrinsèque associé au mobile, cette durée étant mesurée à partir du signal d'initialisation, caractérisé en ce que le signal d'identification envoyé par chaque mobile comporte cette première partie de ce code spécifique.

2. Système selon la revendication 1, caractérisé en ce que les mobiles sont aptes à envoyer cette première partie de leur code spécifique au début de l'émission de leur signal d'identification.

3. Système selon l'une des revendications 1 ou 2, caractérisé en ce que la borne est apte à détecter l'émission simultanée par deux mobiles différents d'une même première partie de code spécifique, et en ce qu'elle comporte des moyens pour demander aux mobiles identifiés par cette même première partie de code spécifique d'émettre la suite de leur code spécifique (de préférence un deuxième caractère du code) au bout d'un temps déterminé, mesuré à partir d'un nouveau signal d'initialisation et lié de manière univoque à la valeur de cette suite du code.

4. Système selon la revendication 3, caractérisé en ce que, en réponse à un signal d'initialisation, chaque mobile émet d'abord son signal d'identification suivi d'un mot qui lui est propre et qui est d'un type reconnaissable, tel que la superposition de deux mots de ce type donne un mot d'un type différent pouvant être reconnu par la borne comme n'étant pas issu d'une émission par un unique mobile.

5. Système selon la revendication 4, caractérisé en ce que le mot émis à la suite du signal d'identification est une suite binaire aléatoire présentant des caractéristiques telles que la réception simultanée par la borne de deux suites différentes émises en même temps par deux mobiles différents soit aisément détectable par la borne.

6. Système selon l'une des revendications précédentes, caractérisé en ce que la borne attribue à chaque mobile identifié un code provisoire pour la durée d'un échange de données effectué entre la borne et le mobile pendant que le mobile se trouve dans un rayon d'action de la borne, ce code provisoire étant annulé à la fin de l'échange.

7. Système selon l'une des revendications précédentes, caractérisé en ce qu'il comprend :
- un transpondeur associé à chaque mobile susceptible de se présenter, un code spécifique d'au moins un caractère étant associé à chaque transpondeur, les caractères étant choisis dans un ensemble ordonné dans lequel on attribue des valeurs ordonnées à ces caractères ou à des groupes de ces caractères;
- un organe de contrôle situé dans la borne et communiquant par voie électromagnétique avec les transpondeurs;
le système ayant les particularités suivantes :
- un transpondeur est apte à émettre un signal d'identification seulement à partir de la réception d'un signal d'initialisation transmis par la borne;
- le transpondeur émet au moins le début de son code spécifique au bout d'un temps lié d'une manière univoque à la valeur de ce début de code, de manière que deux transpondeurs ayant un début de code différent émettent à des moments différents.

8. Système selon la revendication 7, caractérisé en ce que chaque transpondeur peut être interrogé par la borne en étant désigné par le début de code reçu par celle-ci, et peut :
- recevoir un code personnel provisoire destiné à servir pendant la durée de l'échange de données,
- émettre des données qui le concernent,
- recevoir d'autres données,
- recevoir de la borne un signal de fin d'échanges.

## Patentansprüche

1. System für die personalisierte Kommunikation zwischen einer Station (B) und beweglichen Einheiten (V1 bis V4), die in die Nähe dieser Station gelangen können, das ein Übertragungsprotokoll benutzt, das mit einem den verschiedenen vorhandenen beweglichen Einheiten gemeinsamen Initialisierungssignal beginnt und mit der Sendung eines Identifizierungssignals von jeder beweglichen Einheit fortgesetzt wird, wobei diese Sendung am Ende einer Dauer ausgeführt wird, die mit dem Wert eines ersten Teils eines der beweglichen Einheit zugehörigen, intrinsischen spezifischen Codes in Beziehung steht, wobei diese Dauer ab dem Initialisierungssignal gemessen wird, dadurch gekennzeichnet, daß das Identifizierungssignal, das von jeder beweglichen Einheit geschickt wird, diesen ersten Teil dieses spezifischen Codes enthält.

2. System gemäß Anspruch 1, dadurch gekennzeichnet, daß die beweglichen Einheiten diesen ersten Teil ihres spezifischen Codes am Anfang des Sendens ihres Identifizierungssignals schicken können.

3. System gemäß einem der Ansprüche 1 oder 2, dadurch gekennzeichnet, daß die Stationen den gleichzeitig von zwei verschiedenen beweglichen Einheiten gesandten selben ersten Teil des spezifischen Codes erfassen kann und daß es Mittel enthält, um die durch diesen selben Teil des spezifischen Codes identifizierten beweglichen Einheiten dazu aufzufordern, die Fortsetzung ihres spezifischen Codes (vorzugsweise ein zweites Zeichen des Codes) am Ende einer bestimmten Zeit zu senden, die ab einem neuen Initialisierungssignal gemessen wird und auf eineindeutige Weise mit dem Wert dieser Fortsetzung des Codes in Beziehung steht.

4. System gemäß Anspruch 3, dadurch gekennzeichnet, daß aufgrund eines Initialisierungssignals jede bewegliche Einheit zunächst sein Identifizierungssignal aussendet, gefolgt von einem Wort, das ihm eigen ist und das von einem wiedererkennbaren Typ ist, so daß die Überlagerung von zwei Wörtern dieses Typs ein Wort eines anderen Typs ergibt, das von der Station als nicht von einer einzigen beweglichen Einheit ausgesandt erkannt werden kann.

5. System gemäß Anspruch 4, dadurch gekennzeichnet, daß das in der Fortsetzung des Identifizierungssignals ausgesandte Wort eine zufällige binäre Folge ist, die Eigenschaften aufweist, so daß der gleichzeitige Empfang durch die Station von zwei unterschiedlichen Folgen, die von zwei unterschiedlichen beweglichen Einheiten gleichzeitig ausgesandt wurden, von der Station einfach erfaßt werden kann.

6. System gemäß einem der vorangehenden Ansprüche, dadurch gekennzeichnet, daß die Station jeder identifizierten beweglichen Einheit für die Dauer eines zwischen der Station und der beweglichen Einheit ausgeführten Datenaustausches einen vorläufigen Code zuweist, während sich die bewegliche Einheit in einem Aktionsradius der Station befindet, wobei dieser vorläufige Code am Ende des Austausches annulliert wird.

7. System gemäß einem der vorangehenden Ansprüche, dadurch gekennzeichnet, daß es umfaßt:
- ein Antwortgerät, das jeder beweglichen Einheit, die vorkommen kann, zugehört, wobei jedem Antwortgerät ein spezifischer Code mit wenigstens einem Zeichen zugehört, wobei die Zeichen aus einer geordneten Gesamtheit gewählt sind, in der diesen Zeichen oder Gruppen solcher Zeichen geordnete Werte zugewiesen sind;
- ein Steuerelement, das sich in der Station befindet und auf elektromagnetischem Weg mit den Antwortgeräten in Verbindung steht;
wobei das System die folgenden Besonderheiten besitzt:
- ein Antwortgerät kann ein Identifizierungssignal nur bei Empfang eines von der Station gesandten Initialisierungssignals aussenden;
- das Antwortgerät sendet wenigstens den Anfang seines spezifischen Codes am Ende einer Zeit, die auf eineindeutige Weise mit dem Wert dieses Codeanfangs in Beziehung steht, derart, daß zwei Antwortgeräte, die einen unterschiedlichen Codeanfang besitzen, in unterschiedlichen Zeitpunkten senden.

8. System gemäß Anspruch 7, dadurch gekennzeichnet, daß jedes Antwortgerät von der Station abgefragt werden kann, indem es durch den von demselben empfangenen Codeanfang bezeichnet wird, und:
- einen vorläufigen persönlichen Code empfangen kann, der dazu bestimmt ist, während der Dauer des Datenaustausches benutzt zu werden,
- Daten aussenden kann, die es betreffen
- andere Daten empfangen kann,
- von der Station ein Signal des Austauschendes empfangen kann.

## Claims

1. System for personalized communication between a terminal (B) and mobile stations (V1 to V4) liable to arrive near this terminal, and using an exchange protocol which commences by an initialization signal common to the different mobile stations arriving and which continues by the emission of an identification signal by each mobile station, this emission taking place at the end of a period tied to the value of a first part of an intrinsic specific code associated with the mobile station, this period starting from the initialization signal, characterized in that the identification signal emitted by each mobile station comprises the first part of this specific code.

2. System according to claim 1, characterized in that the mobile stations are capable of emitting this first part of their specific code at the commencement of the emission of their identification signal.

3. System according to claims 1 or 2, characterized in that the terminal is capable of detecting the simultaneous emission by two different mobile stations of one and the same first part of a specific code and that it comprises means for requesting the mobile stations identified by this same first part of a specific code to emit the remainder of their specific code (preferably a second character of the code) at the end of a certain time measured from a new initialization signal and unequivocally tied to the value of this continuation of the code.

4. System according to claim 3, characterized in that, in response to an intialization signal, each mobile station first of all emits its identification signal followed by a word appropriate to it and of a recognizable type, such that the superimposition of two words of this type results in a word which is of a different type and which can be recognized by the terminal as not having emanated from an emission by one single mobile station.

5. System according to claim 4, characterized in that the word emitted following the identification signal is a chance binary succession having characteristics such that the simultaneous reception by the terminal of two different succession emitted at the same time by two different mobile stations is easily detectable by the terminal.

6. System according to one of the preceding claims, characterized in that the terminal attributes to each mobile station identified a provisional code for the duration of an exchange of data effected between the terminal and the mobile station while the mobile station is situated within a radius of action of the terminal, this provisional code being annulled at the end of the exchange.

7. System according to one of the preceding claims, characterized in that it comprises :
- a transponder associated with each mobile station liable to arrive, a specific code of at least one character being associated with each transpoder, the characters being selected from an ordered set in which ordered values are attributed to these characters or to groups of these characters;
- a control device situated in the terminal and communicating by electromagnetic means with the transpoders;
the system having the following particular features:
- a transponder is only capable of emitting an identification signal after receiving an initialization signal transmitted by the terminal;
- the transponder emits at least the beginning of its specific code at the end of a period unequivocally tied to the value of this beginning of a code, so that two transponders having a different code commencement will emit at different moments.

8. System according to claim 7, characterized in that each transponder can be interrogated by the terminal, being designated by the commencement of a code received by the said terminal, and can:
- receive a provisional personal code designed to be used throughout the duration of the exchange of data,
- emit data which concern it,
- receive other data,
- receive from the terminal an end of exchange signal.
